# EUROPEAN PATENT SPECIFICATION

(11) **EP 2 366 444 B1**
(45) Date of publication and mention of the grant of the patent: **19.06.2013**
(21) Application number: 11250204.2
(22) Date of filing: 22.02.2011
(51) Int. Cl.: B01D 46/24

(54) **Honeycomb structure**
Wabenstruktur
Structure en nid d'abeille

(30) Priority: 18.03.2010 JP 2010063066
(43) Date of publication of application: 21.09.2011
(73) Proprietor: NGK Insulators, Ltd., Nagoya-City, Aichi Pref. 467-8530 (JP)
(72) Inventor: Matsumoto, Tasuku, Nagoya City Aichi-ken, 467-8530 (JP)
(74) Representative: Paget, Hugh Charles Edward

(56) References cited:
- EP-A1- 1 702 909
- EP-A2- 2 130 598
- US-A1- 2006 059 877
- US-A1- 2006 177 629
- US-A1- 2007 068 128

## Description

### Background of the Invention and Related Art Statement

The present invention relates to a honeycomb structure. More specifically, the present invention relates to a honeycomb structure hardly having crack generation even under a condition having rapid temperature change with reducing the amount of raw materials to be used as much as possible.

There has conventionally been used a ceramic honeycomb structure for a catalyst carrier using catalysis, such as an internal combustion engine, a boiler, a chemical reactor, or a fuel cell reformer, or a trapping filter of particulate matter in exhaust gas, in particular, diesel microparticles (diesel particulate filter: hereinbelow sometimes referred to as a "DPF").

A honeycomb structure used for such a purpose generally has a plurality of cells separated by porous partition walls and functioning as fluid passages. In particular, when the honeycomb structure is used as a filter for trapping particulate matter, the honeycomb structure has a structure where adjacent cells are plugged in end portions on mutually opposite sides in such a manner that each of the end faces of the structure shows checkerwise pattern. In a honeycomb structure having such a structure, a fluid to be treated flows into the cells which are not plugged in the inflow side end face, i.e. cells which are plugged in the outflow side end face, passes through porous partition walls, and discharged from the cells which are plugged in the inflow side end face and not plugged in the outflow side end face. At that time, the partition walls function as a filter. For example, when it is used as a DPF, particulate matter (hereinbelow sometimes referred to as "PM") such as soot discharged from the diesel engine is trapped by the partition walls and deposits on the partition walls.

As such a honeycomb structure, there has been known a structure constituted by bonding a plurality of honeycomb-shaped honeycomb segments with a bonding material. Specifically, an example is a structure having a honeycomb structural portion constituted by bonding a plurality of honeycomb-shaped honeycomb segments with a bonding material, an outer peripheral wall formed so as to cover the outer peripheral face of the honeycomb structural portion, and a filling portion for filling the gap formed between the honeycomb structural portion and the outer peripheral wall (see, e.g., WO No. 07/23653 pamphlet). The arrangement of the filling portion enables to inhibit crack generation in the honeycomb structure caused by clogging of cells with soot due to extreme reduction in a cross-sectional area in the outer peripheral portion of the honeycomb structural portion.

However, in the case that the honeycomb structure described in WO No. 07/23653 pamphlet is used under a condition having rapid temperature change (e. g. , close coupled disposition (i.e. disposition where the honeycomb structure is disposed near an engine, is exposed to high temperature exhaust gas, and has severe temperature change), rapid acceleration, rapid deceleration, etc.), a crack is sometimes caused in the outer peripheral portion due to the generation of large temperature gradient in the filling portion and the outer peripheral wall. For example, if the vehicle vibrates after the generation of a crack in the outer peripheral portion, there arise problems that a part of the filling portion or the outer peripheral portion is ejected from the exhaust system and that the crack grows to have leakage of soot.

On the other hand, the close coupled disposition has been employed in recent years. There has strongly been desired the development of a honeycomb structure which hardly has a crack in the outer peripheral portion of the honeycomb structure, i.e., which is excellent in crack resistance with reducing the amount of raw materials to be used as much as possible (i.e., without excessively increasing the amount of raw materials to be used though crack generation can be suppressed by employing a countermeasure such as thickening the outer peripheral wall by increasing the amount of raw materials to be used) even when the structure is used in a severe environment such as the close coupled disposition.

The present invention has been made in view of such problems of prior art and aims to provide a honeycomb structure excellent in crack resistance, the honeycomb structure hardly having a crack even under a condition having rapid temperature change with reducing the amount of raw materials to be used as much as possible.

### Summary of the Invention

As a result of the present inventors' earnest study for solving the aforementioned problems, they found out that the aforementioned aim can be achieved by focusing on and adjusting the cross-sectional area of the filling portion, the diameter of the circle whose diameter is maximum among inscribed circles drawn in the filling portion (diameter of the largest inscribed circle) , and the ratio of the width of the filling portion to the diameter of the largest inscribed circle, which lead to the present invention.

According to the present invention, there is provided the following honeycomb structure.

A honeycomb structure comprising: a honeycomb structural portion having a plurality of honeycomb segments having porous partition walls separating and forming a plurality of cells passing through from one end face to the other end face and functioning as fluid passages and plugging portions plugging opening portions of predetermined cells in the one end face and opening portions of the remaining cells in the other end face, an outer peripheral wall formed so as to cover the outer peripheral face of the honeycomb structural portion, and a filling portion filling a gap formed between the honeycomb structural portion and the outer peripheral wall; wherein the honeycomb segments include a polygonal columnar honeycomb segment which does not constitute the outer peripheral face of the honeycomb structural portion in a cross section perpendicular to a cell extension direction, the ratio of a total area of the filling portion to an area of the columnar honeycomb segment in the cross section perpendicular to the cell extension direction is 2.55% or less, when circles are inscribed in an outer peripheral edge of a region which the filling portion takes over in the cross section perpendicular to the cell extension direction, the circle having the largest diameter among the circles has a diameter D of 1.8 mm or less, and the value obtained by dividing a distance W between two points which are located on the outer peripheral edge of the region and whose linear distance is maximum by the diameter D is 50 or less.

The honeycomb structure according to [1], wherein the ratio of the total area of the filling portion to the area of the columnar honeycomb segment in the cross section perpendicular to the cell extension direction is 0.5 to 2.55%.

The honeycomb structure according to [1] or [2] , wherein the value obtained by dividing the distance W by the diameter D is 5 to 50.

According to a honeycomb structure of the present invention, the ratio of the total area of the filling portion to the area of the columnar honeycomb segment in the cross section perpendicular to the cell extension direction is 2.55% or less, the circle having the maximum diameter has a diameter D of 1.8 mm or less, and the value obtained by dividing a distance W between two points which locate on the outer peripheral edge of the region and whose linear distance is maximum by the diameter D is 50 or less. Therefore, stress to the filling portion caused due to the deformation in the radial direction (direction perpendicular to the central axis of the honeycomb structure) in an end face of the honeycomb structure caused due to rapid temperature change is reduced. In addition, there is exhibited an effect of hardly generating a crack even under a condition having rapid temperature change, i.e., an effect of excellent crack resistance with reducing the amount of raw materials used as much as possible.

### Brief Description of the Drawings

Fig. 1 is a perspective view schematically showing an embodiment of a honeycomb structure of the present invention.

Fig. 2 is a plan view showing an end face on one side of an embodiment of a honeycomb structure of the present invention.

Fig. 3 is a plan view schematically showing a partial enlarged end face on one side of an embodiment of a honeycomb structure of the present invention.

Fig. 4 is a plan view schematically showing an enlarged filling portion of an embodiment of a honeycomb structure of the present invention.

Fig. 5 is a plot view showing a relation between S1/S0(%) and diameter D.

Fig. 6 is a plot view showing a relation between S1/S0(%) and D/W.

Fig. 7 is a cross-sectional view schematically showing an exhaust gas purification apparatus used in a soot deposition treatment method and a soot compulsory regeneration test measurement method.

Fig. 8 is a graph showing a relation between time and speed in a soot deposition treatment method.

### Reference Numerals

1: exhaust gas purification apparatus, 2, 12: end face on one side, 3, 13: end face on the other side, 4, 14: cell, 4a: predetermined cell, 4b: remaining cell, 5, 15: partition wall, 8: plugging portion, 10: honeycomb segment, 10a: columnar honeycomb segment, 10b: incomplete honeycomb segment, 11: honeycomb structural portion, 20: outer peripheral wall, 30: filling portion, 31: region which the filling portion takes over, 32: circle having the largest diameter, 33a, 33b: point, 40: bonding portion, 50: oxidation catalyst carrier, 51: can, 52: cushion material, 55: inflow port, 56: outflow port, 100: honeycomb structure, D: diameter, G: exhaust gas, W: distance

### Detailed Description of the Invention

Hereinbelow, an embodiment of the present invention will be described. However, the present invention is by no means limited to the following embodiment, and it should be understood that an embodiment having change or improvement suitably made on the following embodiment on the basis of ordinary knowledge of a person of ordinary skill in the art in the range of not deviating from the gist of the present invention is included in the scope of the present invention.

### [1] Honeycomb structure:

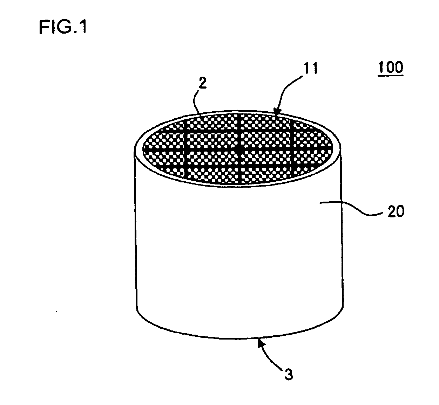

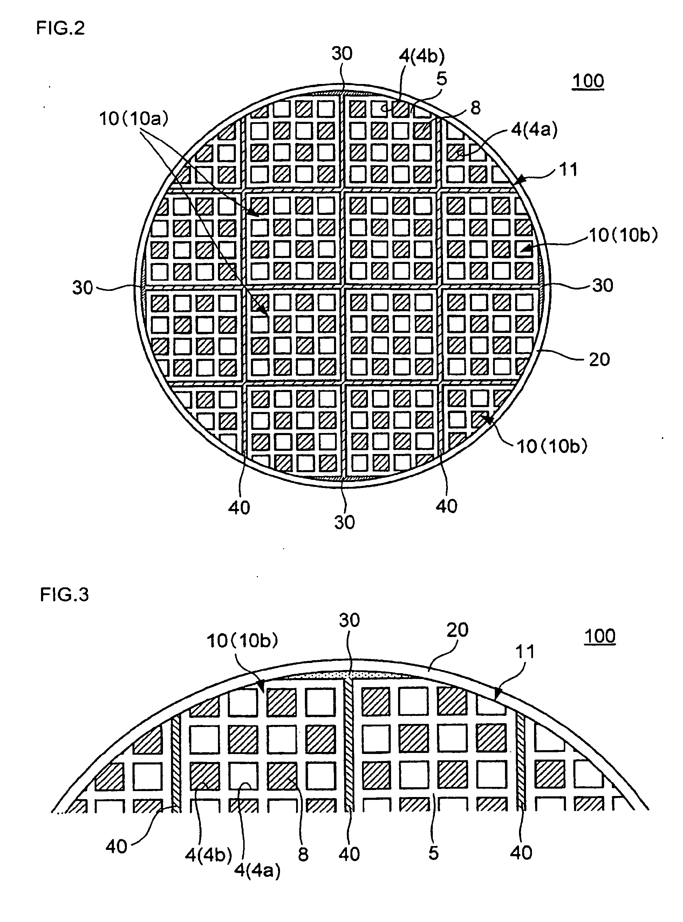

Fig. 1 is a perspective view schematically showing an embodiment of a honeycomb structure of the present invention, Fig. 2 is a plan view showing an end face on one side of an embodiment of a honeycomb structure of the present invention, and Fig. 3 is a plan view schematically showing a partial enlarged end face on one side of an embodiment of a honeycomb structure of the present invention. As shown in Figs 1 to 3, a honeycomb structure 100 of the present embodiment is provided with a honeycomb structural portion 11 having a plurality of honeycomb segments 10 having porous partition walls 5 separating and forming a plurality of cells 4 passing through from one end face 2 to the other end face 3 and functioning as fluid passages and plugging portions 8 plugging opening portions of predetermined cells 4a in the one end face 2 and opening portions of the remaining cells 4b in the other end face 3, an outer peripheral wall 20 formed so as to cover the outer peripheral face of the honeycomb structural portion 11, and a filling portion 30 filling a gap formed between the honeycomb structural portion 11 and the outer peripheral wall 20.

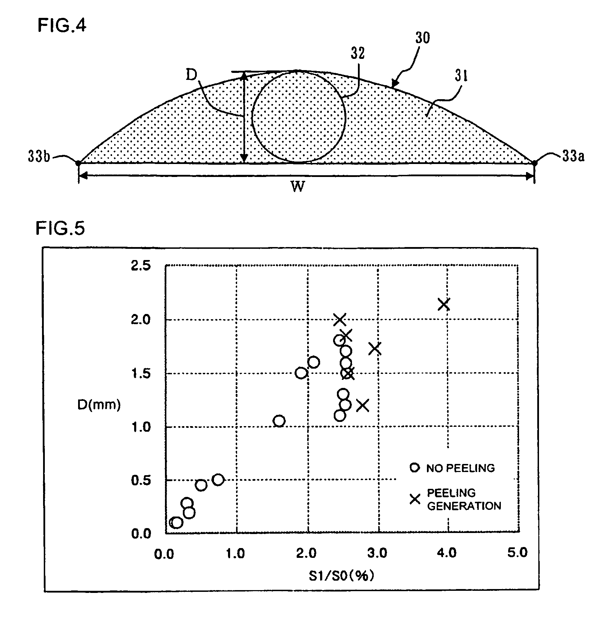

In addition, the honeycomb segments 10 include a polygonal columnar honeycomb segment 10a which does not constitute the outer peripheral face of the honeycomb structural portion 11 in a cross section perpendicular to the cell 4 extension direction, and the ratio of total area of the filling portion 30 to the area of the columnar honeycomb segment 10a in the cross section perpendicular to the cell 4 extension direction is 2.55% or less. In addition, as shown in Fig. 4, when circles are inscribed in an outer peripheral edge of a region 31 which the filling portion 30 takes over in the cross section perpendicular to the cell 4 extension direction, the circle 32 having the largest diameter has a diameter D of 1.8 mm or less . In addition, the value obtained by dividing a distance W between two points 33a, 33b which are located on the outer peripheral edge of the region 31 (i.e., between two points 33a, 33b located on the outer peripheral edge of the region 31 which one filling portion 30 takes over) and whose linear distance is maximum by the diameter D is 50 or less. Fig. 4 is a plan view schematically showing an enlarged filling portion 30 of an embodiment of a honeycomb structure 100 of the present invention.

In such a honeycomb structure 100, by satisfying the predetermined conditions where the ratio of the total area of the filling portion 30 to the area of the columnar honeycomb segment 10a in the cross section perpendicular to the cell 4 extension direction is 2.55% or less; when circles are inscribed in an outer peripheral edge of the region which the filling portion 30 takes over in the cross section perpendicular to the cell 4 extension direction, the circle having the largest diameter has a diameter D of 1.8 mm or less; and the value obtained by dividing the distance W between two points which are located on the outer peripheral edge of the aforementioned region and whose linear distance is maximum by the diameter D is 50 or less; a crack is hardly caused even under a condition having rapid temperature change with reducing the amount of raw materials used. That is, in the present invention, it was found out that, by focusing on three parameters of the ratio of the total area of the filling portions, the aforementioned diameter D, and the value obtained by dividing the aforementioned distance W by the aforementioned diameter D out of an indefinite number of parameters present and adjusting the three parameters to be predetermined ranges, there can be obtained a honeycomb structure hardly having a crack even under a condition having rapid temperature change with reducing the amount of raw materials to be used.

In the honeycomb structure 100 of the present embodiment, the entire shape in a cross section perpendicular to the cell 4 extension direction is a triangle, a quadrangle, a hexagon, an octagon, a circle, or a combination of these shapes (e.g., the case that the entire shape of an end face on one side is a quadrangle, while the entire shape of the end face on the other side is a circle).

There is no particular limitation on the entire size of the honeycomb structure 100, and it may have a desired size. Specifically, the diameter of the honeycomb structure 100 is preferably 80 to 300 mm, more preferably 100 to 280 mm. In addition, the length of the honeycomb structure 100 in the cell 4 extension direction (length in the central axial direction) is preferably 100 to 350 mm, more preferably 100 to 300 mm.

### [1-1] Honeycomb segment:

The material for the honeycomb segment 10 is preferably ceramic, more preferably at least one kind selected from the group consisting of silicon carbide (SiC), silicon-silicon carbide based composite material, cordierite, mullite, alumina, spinel, silicon carbide-cordierite based composite material, lithium aluminum silicate, aluminum titanate, and iron-chrome-aluminum based alloy because of excellent strength and thermal resistance. Of these, silicon carbide is preferable. The content of the ceramic raw material is preferably 40 to 90% by mass with respect to the entire forming raw materials.

The honeycomb segment 10 (partition walls 5 constituting the honeycomb segment 10) is preferably porous. The porosity of the honeycomb segment 10 is preferably 30 to 70%, more preferably 40 to 60%. By adjusting the porosity in such a range, pressure loss can be reduced with maintaining strength. When the porosity is below 30%, the pressure loss may increase. When the porosity is above 70%, strength may deteriorate, or thermal conductivity may deteriorate. The porosity is measured by a mercury porosimeter.

The honeycomb segment 10 preferably has an average pore size of 5 to 30 µm, more preferably 10 to 25 µm. By adjusting the average pore size in such a range, particulate matter (PM) can effectively be trapped. When the average pore size is below 5 µm, clogging is prone to be caused by particulate matter (PM). When the average pore size is above 30 µm, particulate matter (PM) may pass through the filter without being trapped. The average pore size is measured by a mercury porosimeter.

In the case that the material for the honeycomb segment 10 is silicon carbide, the average particle diameter is preferably 5 to 40 µm. By adjusting the average particle diameter in such a range, control to obtain porosity and pore size suitable for the filter is easy. When the average particle diameter is smaller then 5 µm, the pore size becomes too small. When the average particle diameter is larger than 40 µm, the porosity may become too high. When the pore size is too small, clogging may easily be caused by particulate matter (PM). When the porosity is too high, pressure loss may increase. The average particle diameter of the raw material is measured according to JIS R1629.

The shape of the cells 4 of the honeycomb segment 10 (shape of the cells 4 in a cross section perpendicular to the cell 4 extension direction of the honeycomb structure 100) is preferably a quadrangle, a hexagon, or an octagon, more preferably a square or a rectangle.

The thickness of the partition walls 5 is preferably 0.20 to 0.50 mm, more preferably 0.25 to 0.45 mm. When the thickness of partition walls 5 is smaller than 0.20 mm, strength of the honeycomb structure 100 may deteriorate. When the thickness of partition walls 5 is larger than 0.50 mm, the area of partition walls 5 for treating exhaust gas becomes small to sometimes cause deterioration of exhaust gas treatment performance, and the pressure loss upon treating exhaust gas may increase.

The cell density of the honeycomb segment 10 is preferably 20 to 90 cells/ cm², more preferably 30 to 70 cells/cm². When the cell density is lower than 20 cells/cm², the partition walls may become too thick, or the cell width becomes too large. When the cell density is higher than 90 cells/cm², the cell width may become too small.

In addition, the number of the honeycomb segments 10 is preferably 4 to 60, more preferably 9 to 40 in a cross section perpendicular to the cell 4 extension direction of the honeycomb structure 100 of the present embodiment. As the size of the honeycomb segment 10, the area of a cross section perpendicular to the cell 4 extension direction is 9 to 25 cm², more preferably 12 to 19 cm² When it is smaller than 9 cm², the pressure loss may become large when exhaust gas circulates in the honeycomb structure 100. When it is larger than 25 cm², the honeycomb segment 10 may be damaged.

The honeycomb segments 10 includes a polygonal columnar honeycomb segment 10a. The specific shape of the columnar honeycomb segment 10a is a quadrangular column, a hexagonal column, an octagonal column, a triangular column, a circular column, or the like. Of these, a quadrangular prism as shown in Fig. 2 is preferable from the viewpoint of easy manufacturing.

As shown in Fig. 2, the honeycomb segments 10 are constituted of central portion honeycomb segments formed by the disposition of columnar honeycomb segments 10a adjacent to one another vertically and horizontally in a cross section perpendicular to the cell 4 extension direction and outer peripheral portion honeycomb segments of incomplete honeycomb segments 10b each having a shape where a part of the columnar honeycomb segment is cut off along the outer peripheral wall 20. Thus, the columnar honeycomb segment 10a does not constitute the outer peripheral face of the honeycomb structural portion 11, i.e., does not have a portion cut off along the outer peripheral wall 20. In other wards, the columnar honeycomb segment 10a maintains the shape formed when the kneaded clay is extrusion-formed. Specifically, in the case that the kneaded clay is extrusion-formed so as to have a quadrangular columnar shape, the quadrangular columnar shape is referred to as the columnar honeycomb segment.

The honeycomb structure 100 (honeycomb structural portion 11) is constituted in such a manner that a plurality of honeycomb segments 10 are adjacently disposed so that side faces of adjacent segments face each other as shown in Fig. 2 and that the adjacent side faces are bonded to each other with a bonding portion 40. The bonding portion 40 is preferably disposed on the entire side faces facing each other of the adjacent honeycomb segments 10. As the material for the bonding portion 40, there is preferably a material obtained by adding additives such as an organic binder, a resin balloon, and a dispersant to an inorganic raw material such as inorganic fibers, colloidal silica, clay, and SiC (silicon carbide) particles and adding water to them, followed by kneading.

The thickness of the bonding portion 40 is preferably 0.1 to 3.0 mm, more preferably 0.5 to 2.0 mm. When it is smaller than 0.1 mm, the force for bonding the honeycomb segments 11 may become weak, and adjacent honeycomb segments 11 may be brought into contact with each other. When it is larger than 3.0 mm, since the area of the bonding portion 40 becomes large in a cross section perpendicular to the direction where the exhaust gas passes (cell extension direction), pressure loss becomes large upon sending exhaust gas in the structure. Incidentally, the thickness of the bonding portion 40 is the distance between adjacent honeycomb segments 11.

The material (ceramic raw material) for the plugging portions 8 is preferably the same as the material for the partition walls 5 constituting the honeycomb structure 100. This enables the plugging portions 8 to firmly bond to the partition walls 5 upon firing.

In the plugging portions 8, the predetermined cells 4a and the remaining cells 4b are preferably disposed alternately in such a manner that a checkerwise pattern is formed in each of the end faces of the honeycomb segment 10.

The depth of the plugging portions 8 is preferably 1.0 to 15.0 mm, more preferably 3.0 to 12.0 mm. When it is larger than 1.0 mm, strength of the plugging portions 8 may deteriorate. On the other hand, when it is larger than 15.0 mm, the area where PM is trapped of the partition walls 5 may become small. Here, the depth of the plugging portions 8 means the length in the cell 4 extension direction of the plugging portion 8.

### [1-2] Outer peripheral wall:

The outer peripheral wall 20 is formed so as to cover the outer peripheral face of the honeycomb structural portion 11. The arrangement of the outer peripheral wall 20 in such a manner can reduce unevenness of the outer periphery of the honeycomb structure 100.

The outer peripheral wall 20 is preferably a unitarily formed wall formed unitarily with the porous substrate upon forming. However, a cement coat wall obtained by grinding the outer periphery of the porous substrate after the forming to have a predetermined shape and forming the outer peripheral wall with ceramic cement or the like is also a preferable mode. In the case of a unitarily formed wall, the material .for the outer peripheral wall 20 is preferably the same as the material for the partition walls 5. In addition, in the case that the outer peripheral wall 20 is a cement coat wall, as the material for the cement coat wall, there may be employed a material obtained by adding a flux component such as glass to the common material.

The thickness of outer peripheral wall 20 is preferably 0.1 to 3.0 mm, more preferably 0.3 to 2.0 mm. When it is smaller than 0.1 mm, a crack may easily be caused when coating of the outer periphery is performed. When it is larger than 3.0 mm, pressure loss may become large when exhaust gas is sent in the structure.

### [1-3] Filling portion:

The filling portion 30 fills the gap formed between the honeycomb structural portion 11 and the outer peripheral wall 20 as described above. The material for the filling portion 30 may be slurry obtained by adding additives such as an organic binder, a resin balloon, and a dispersant to an inorganic raw material such as inorganic fibers, colloidal silica, clay, and SiC particles and further adding water to them, followed by kneading.

In addition, the ratio of the total area of the filling portions 30 to the area of the columnar honeycomb segment(s) 10a in a cross section perpendicular to the cell 4 extension direction is necessarily 1.55% or less, preferably 0.5 to 1.55%. When it is in the preferable range (0.5 to 2.55%), productivity in the filling portion-forming step is good. When the ratio is above 2.55, since a large temperature gradient is generated in a radial direction of the honeycomb structure by rapid temperature change (rapid temperature rise or rapid cooling), the difference in thermal expansion becomes large. Therefore, peeling is caused in the filling portion 30. Incidentally, there is no particular limitation on the aforementioned ratio as long as it is 2.55% or less. However, when it is below 0.5%, it may become difficult to form the filling portion 30. Therefore, from the viewpoint of designing, the aforementioned ratio is preferably 0.5% or more. Incidentally, though the honeycomb structure can be manufactured without the step for forming the filling portion by adjusting the application amount of the outer peripheral coat, manufacturing a honeycomb structure by adjusting the application amount of the outer peripheral coat requires time and effort. Incidentally, the area of the columnar honeycomb segment (s) 10a in a cross section perpendicular to the cell 4 extension direction means a total area of the area of the partition walls 5 and the openings of the cells 4.

In addition, when a circle inscribed in the outer peripheral edge of a region which the filling portion 30 takes over in the cross section perpendicular to the cell 4 extension direction, the circle having the largest diameter among the circles has a diameter D of necessarily 1.8 mm or less, preferably 0.5 to 1.8 mm. When it is in the preferable range (0.5 to 1.8 mm) , the productivity in the filling portion-forming step is good. When the diameter D is above 1.8 mm, since a large temperature gradient is caused in a radial direction in an end face of the honeycomb structure due to rapid temperature change (rapid temperature rise or rapid cooling), the difference in thermal expansion becomes large. Therefore, peeling of the filling portion 30 is caused. Incidentally, there is no particular limitation on the diameter D as long as it is 1.8 mm or less. However, when it is below 0.5 mm, forming of the filling portion 30 may become difficult. Therefore, from the viewpoint of designing, the diameter D is preferably 0.5 mm or more. Incidentally, though the honeycomb structure can be manufactured without the step for forming the filling portion by adjusting the application amount of the outer peripheral coat, manufacturing a honeycomb structure by adjusting the application amount of the outer peripheral coat requires time and effort.

Fig. 5 is a plot view showing a relation between S1/S0 (%) and diameter D. According to Fig. 5, it is understood that, in the case that the ratio (S1/S0) is above 2.55 with the diameter D being above 1.8 mm, peeling is caused in the filling portion 30.

In the region which the filling portion 30 takes over in a cross section perpendicular to the cell 4 extension direction, the value obtained by dividing a distance W between two points which are located on the outer peripheral edge of the region and whose linear distance is maximum by the diameter D is necessarily 50 or less, preferably 5 to 50. When it is in the preferable range (5 to 50), productivity in the filling portion-forming step is good. When the value obtained by dividing the distance W by the diameter D is above 50, since the thickness of the filling portion 30 is relatively thin, strength of the filling portion 30 is insufficient to cause a crack even in the case that the temperature gradient in a radial direction of the honeycomb structure 100 is small. Incidentally, when the value obtained by dividing the distance W by the diameter D is 5 or less, the shape is close to a protrusion shape, and chipping or the like is caused upon grinding the outer periphery of the honeycomb segment bonded article where the filling portion 30 is formed to easily cause damage in the filling portion 30. Therefore, it becomes difficult to form the filling portion 30. Therefore, from the viewpoint of designing, the value obtained by dividing the distance W by the diameter D is preferably 5 or more.

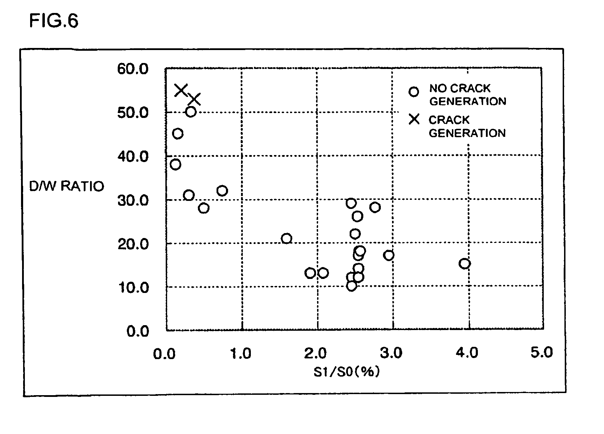

Fig. 6 is a plot view showing a relation between S1/S0(%) and D/W. According to Fig. 6, it is understood that, even if the aforementioned ratio (S1/S0) is 2.55 or less, when the value obtained by dividing the distance W by the diameter D is above 50, a crack is caused.

### [1-4] Catalyst:

The honeycomb structure of the present invention may have a catalyst loaded on the partition walls. By loading the catalyst, CO, HC, and NOx contained in exhaust gas can be purified.

Examples of the catalyst include a ternary catalyst, an oxidation catalyst, a NOx selective reduction SCR catalyst, and a NOx adsorber catalyst. The oxidation catalyst contains a noble metal. As the noble metal, at least one kind selected from the group consisting of platinum (Pt), Rhodium (Rh), and Palladium (Pd) is preferable. The total amount of the noble metal is preferably 10 to 100g per unit volume (1 liter) of the honeycomb structure 100.

The ternary catalyst means a catalyst mainly purifying hydrocarbon (HC), carbon monoxide (CO), and nitrogen oxide (NOx). An example of the catalyst is a catalyst containing platinum (Pt), palladium (Pd), and rhodium (Rh). By the ternary catalyst, hydrocarbon, carbon monoxide, and nitrogen oxide are purified to give carbon dioxide, carbon dioxide, and nitrogen, respectively, by oxidation or reduction.

An example of the NOx selective reduction SCR catalyst is a catalyst containing at least one kind selected from the group consisting of metal reduction zeolite, vanadium, titania, tungsten oxide, silver, and alumina. In addition, examples of the NOx adsorber catalyst include alkali metal and/or alkali earthmetal. Examples of the alkali metal include K, Na, and Li. Examples of the alkali earth metal include Ca. The total amount of K, Na, Li, and Ca is preferably 30 to 300 g per unit volume (1 liter) of the honeycomb structure 100.

### [2] Method for manufacturing honeycomb structure:

An embodiment of a honeycomb structure of the present invention can be manufactured, for example, as follows.

### [2-1] Manufacturing of honeycomb segment:

In the first place, to a ceramic raw material were added a binder, a surfactant, a pore former, water, and the like to obtain a forming raw material. As the ceramic raw material, there is preferably used at least one kind selected from the group consisting of silicon carbide, silicon-silicon carbide based composite material, cordierite, mullite, alumina, spinel, silicon carbide-cordierite based composite material, lithium aluminum silicate, aluminum titanate, and iron-chrome-aluminum based alloy. Of these, silicon carbide or silicon-silicon carbide based composite material is preferable. When silicon-silicon carbide based composite material is used, a mixture of a silicon carbide powder and a metal silicon powder is used as the ceramic raw material. The ceramic raw material content is preferably 40 to 90 mass% with respect to the entire forming raw material.

Examples of the binder include methyl cellulose, hydroxypropoxyl cellulose, hydroxyethyl cellulose, carboxymethyl cellulose, and polyvinyl alcohol. Of these, it is preferable to use methyl cellulose and hydroxypropoxyl cellulose together. The binder content is preferably 2 to 20 mass% with respect to the entire forming raw material.

The water content is preferably 7 to 45 mass% with respect to the entire forming raw material.

As the surfactant, ethylene glycol, dextrin, fatty acid soap, polyalcohol, and the like may be employed. These may be used alone or as a combination of two or more kinds. The surfactant content is preferably 5 mass% or less with respect to the entire forming raw material.

There is no particular limitation on the pore former as long as it forms pores after firing. Examples of the pore former include starch, a resin balloon, water-absorbing resin, and silica gel. The pore former content is preferably 15 mass% or less with respect to the entire forming raw material.

Next, the forming raw material is kneaded to obtain kneaded clay. There is no particular limitation on the method for forming kneaded clay by kneading the forming raw material, and, for example, a method using a kneader or a vacuum kneader can be employed.

Next, kneaded clay is subjected to extrusion forming to obtain a plurality of honeycomb formed articles. Upon extrusion forming, it is preferable to use a die having a predetermined honeycomb segment shape, cell shape, partition wall thickness, cell density, and the like. The material for the die is preferably superhard alloy, which hardly abrades away. Each of the honeycomb formed articles has porous partition walls separating and forming a plurality of cells functioning as fluid passages and the outer peripheral wall located in the outermost periphery.

The partition wall thickness, cell density, outer peripheral portion thickness, and the like of the honeycomb formed article can suitably be determined in accordance with the structure of a honeycomb structure to be manufactured of the present invention in consideration of shrinkage in drying and firing.

It is preferable to dry the honeycomb formed article obtained above before firing. There is no particular limitation on the drying method. Examples of the method include an electromagnetic wave heating method such as microwave heat drying and high frequency dielectric heat drying and an external heating method such as hot air drying and superheated steam drying. Of these, it is preferable to remove a certain amount of water by drying by an electromagnetic wave heating method and then remove the remaining water by drying by an external heating method. As the condition of drying, it is preferable that, after water of 30 to 90 mass% with respect to the water before drying is removed by an electromagnetic wave heating method, water is reduced to 3 mass% or less by an external heating method. As the electromagnetic wave heating method, dielectric heat drying is preferable, and, as the external heating method, hot air drying is preferable.

Next, when the length in the cell extension direction of the honeycomb formed article is not the desired length, it is preferable to cut both the end portions to obtain the desired length. There is no particular limitation on the cutting method, a method using a rim saw cutter or the like may be employed.

Next, the honeycomb formed article is preferably fired to manufacture a honeycomb fired article. It is preferable to calcine the honeycomb formed article before firing in order to remove the binder and the like. The calcination is preferably performed at 400 to 500°C for 0.5 to 20 hours in an ambient atmosphere. There is no particular limitation on the methods of calcination and firing, and firing can be performed by the use of an electric furnace, a gas furnace, or the like. As the firing conditions, it is heated at 1300 to 1500°C for 1 to 20 hours in an inert atmosphere such as nitrogen or argon.

Next, plugging portions are formed in opening portions of predetermined cells in a fluid inlet side end face and opening portions of the remaining cells in a fluid outlet side end face to manufacture a honeycomb segment. Though there is no particular limitation on the method for forming plugging portions, for example, the following method can be employed. After a sheet is bonded to an end face on one side of the honeycomb fired article, holes are made in the positions corresponding to the cells where plugging portions are to be formed of the sheet. Then; the end face having the sheet of the honeycomb fired article is immersed into the plugging slurry obtained by slurrying the constituent materials for the plugging portions to fill the slurry into the openings of the cells where the plugging portions are to be formed through the holes made in the sheet.

For the other end face of the honeycomb fired article, in the cells having no plugging portion on the end face on the one side, plugging portions are formed (plugging slurry is filled) in the same manner as in the method where the plugging portions are formed in the end face on the one side. It is preferable to use plugging slurry obtained by adding a binder such as methyl cellulose and a pore former to a ceramic raw material for a honeycomb formed article and mixing them. It is preferable to perform firing under the same conditions as the aforementioned firing conditions after the plugging portions are formed. Alternatively, the plugging portions may be formed before firing the honeycomb formed article.

### [2-2] Manufacturing of honeycomb structure:

A predetermined number of honeycomb segments are bonded together with a bonding material, which is then dried to form a honeycomb structure where a plurality of honeycomb segments are disposed adjacently so that side faces of the adjacent segments face each other to be bonded with a bonding portion. It is preferable that the bonding portion is disposed on the entire side faces facing each other. The bonding portion plays a role of buffering (absorbing) the volume change when the honeycomb segments thermally expand or shrink and a role of bonding the honeycomb segments together.

There is no particular limitation on the method for applying the bonding material on the side faces of the honeycomb segments, and a method of brush application or the like may be employed.

An example of the bonding material is slurry obtained by adding additives such as an organic binder, a resin balloon, and a dispersant to an inorganic raw material such as inorganic fibers, colloidal silica, clay, or SiC particles, further adding water, and kneading.

The honeycomb segments are bonded together with a bonding material, which is then dried, to obtain a honeycomb segment bonded article (honeycomb structure). Next, after the filler is applied to the portions to become filling portions (portions to be left without being ground after working of the outer periphery) , the filler is dried. Then, there is formed a layer of the filler whose thickness is larger than the filling portion thickness required for manufacturing a honeycomb structure of a predetermined shape. Next, the outer peripheral portion of the honeycomb segment bonded article is ground along a predetermined grinding line to obtain a honeycomb segment bonded article having a ground outer periphery. Incidentally, the layer of the filler (filler layer) may be formed after the grinding of the outer periphery. In this case, the shape of the filler layer is formed in accordance with the predetermined shape of a honeycomb structure. Specifically, there may be employed a method where a small amount of the filler is applied several times until the predetermined shape is obtained. The outer peripheral face of the honeycomb segment bonded article having a ground outer periphery is subjected to an outer periphery coating treatment to form the outer peripheral wall. An example of the method for the outer periphery coating treatment is a method where an outer periphery coating material is applied to the outer peripheral face of the honeycomb segment bonded article, followed by drying. As the outer periphery coating material, there may be used a material obtained by mixing inorganic fibers, colloidal silica, clay, SiC particles, an organic binder, a resin balloon, a dispersant, water, and the like together. There is no particular limitation on the method for applying the outer periphery coating material, and an example of the method is a method where the material is coated with a rubber spatula or the like with rotating the honeycomb segment bonded article on a pottery wheel.

### Example

Hereinbelow, the present invention will specifically be described on the basis of Examples. However, the present invention is by no means limited to these Examples.

### (Example 1)

In the first place, a SiC powder and a metal Si powder were mixed at the mass ratio of 80:20 as the ceramic raw material, where methyl cellulose and hydroxypropoxymethyl cellulose as forming auxiliaries, starch and water-absorbing resin as pore formers, a surfactant, and water were added, and they were kneaded to manufacture a quadrangular columnar kneaded clay with a vacuum kneader.

Next, the kneaded clay was subjected to extrusion forming using a predetermined die to obtain a honeycomb formed article having a square cell shape and a quadrangular columnar entire shape. In addition, after the honeycomb formed article was dried with a microwave drier and further dried completely with a hot air drier, both the end portions of the honeycomb formed article were cut off to have a predetermined size. Next, a mask was bonded to each of the end portions of the honeycomb formed article. Then, holes were made in the positions corresponding to the openings of predetermined cells in one end face on one side of the honeycomb formed article and portions corresponding to the openings of the other cells in the other end face on the other side. Next, after one end portion on the one side was immersed in plugging slurry containing the SiC raw material, the other end portion on the other side was immersed in the plugging slurry. Thus, plugging slurry was filled alternately in the opening portions of the predetermined cells in the one end face on the one side and opening portions of the other cells in the other end face on the other side to show a so-called checkerwise pattern in each of the end faces. Then, the honeycomb formed article was dried with a hot air drier and then fired at 1410 to 1440°C for 15 hours to obtain a honeycomb fired article (honeycomb segment) where plugging portions were alternately disposed in the opening portions of the predetermined cells in the one end face on the one side and opening portions of the other cells in the other end face on the other side to show a so-called checkerwise pattern.

In the honeycomb segment obtained above, the end portion width of a cross section perpendicular to the cell extension direction was 36. 0 mm. In addition, the area of the cross section perpendicular to the cell extension direction (segment area) was 1296 mm². The length in the cell extension direction of the honeycomb segment was 152.4 mm. In addition, partition wall thickness of the honeycomb segment was 0.3 mm, and the cell density was 46.5 cells/cm².

Next, a predetermined number of honeycomb segments were bonded together with a bonding material and dried to form a honeycomb segment bonded article where a plurality of honeycomb segments are adjacently disposed so that side faces of adjacent honeycomb segments might face each other and where the facing side faces were bonded to each other with a bonding portion. Then, a filler was applied to the portions to serve as filling portions (portions to be left without being ground after working of the outer periphery), and the filler was dried to obtain a layer of the filler having a thickness of 2.0 mm. The filler was obtained by mixing SiC particles and colloidal silica together.

Then, the outer periphery of the honeycomb segment bonded article was roughly worked and ground to obtain a desired circular cylindrical shape. At that time, the holding position for the honeycomb segment bonded article of the outer periphery working lathe was adjusted was adjusted so that the S1 (area of filling portion) / S0 might become 0.30% and that the diameter of the largest inscribed circle might become 0.28 mm. After the working of the outer periphery, the honeycomb segment bonded article was subjected to the outer periphery coating treatment to dispose an outer peripheral portion in the outermost periphery of the honeycomb segment bonded article, thereby obtaining a honeycomb structure having a diameter of 143.8 mm as shown in Fig. 1. Incidentally, as the outer periphery coating material used for the outer periphery coating treatment, a material obtained by mixing SiC particles and colloidal silica together was used.

Next, mixed particles (specific surface area of 50m²/g) of γAl₂O₃ having an average particle diameter of 100 µm and CeO₂ having an average particle diameter of 100 µm were subjected to wet pulverization with a ball mill to obtain pulverized particles having an average particle diameter of 5 µm. The pulverized particles were immersed in a solution containing Pt and Rh to load Pt and Rh in the pores of the pulverized particles. To the pulverized particles having Pt and Rh loaded therein were added acetic acid and water to obtain coating slurry. An end portion of the honeycomb fired article obtained above was immersed in the coating slurry. Then, the catalysts were loaded on the partition walls of the honeycomb fired article by sucking the coating slurry from the other end portion side to form a catalyst layer. Then, drying was performed at 600°C for two hours to obtain a honeycomb catalyst article.

The honeycomb structure obtained above had a diameter of 144 mm, a length of 152 mm, an S1/S0 ratio of 0.30%, a diameter of the inscribed circle of 0.28 mm, and a W/D ratio of 31.

The honeycomb structure obtained above was subjected to a "soot compulsory regeneration test" as follows. The results are shown in Table 1.

In Table 1, "length" means the length in the central axial direction of the honeycomb structure, "S1/S0 (%)" means the ratio of the total area of the filling portion to the area of the columnar honeycomb segment in the cross section perpendicular to the cell extension direction, "diameter of largest inscribed circle (mm)" means a diameter of the circle having the largest diameter when circles were inscribed in an outer peripheral edge of a region which the filling portion takes over in a cross section perpendicular to the cell extension direction, and "W/D ratio" means the value obtained by dividing a distance W between two points which were located on the outer peripheral edge of the region the filling portion takes over in a cross section perpendicular to the cell extension direction and whose linear distance is maximum by the diameter D.

### [Method of soot deposition treatment]

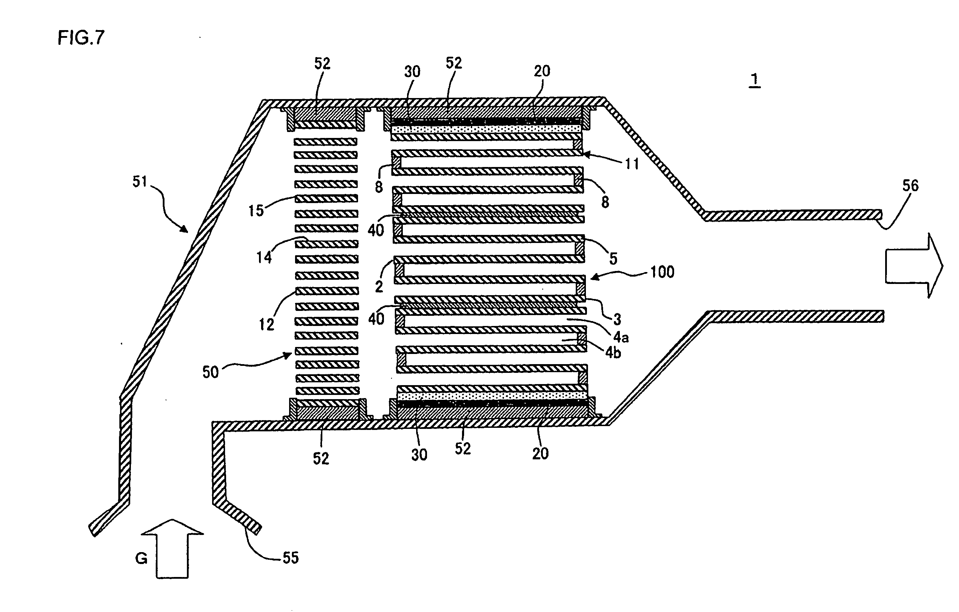

Before the [soot compulsory regeneration test] is performed, the honeycomb structure obtained is subjected to a soot deposition treatment. In the soot deposition treatment, in the first place, an exhaust gas purification apparatus 1 as shown in Fig. 7 is manufactured. The exhaust gas purification apparatus 1 is provided with a honeycomb structure 100 obtained in the present Example, a honeycomb-shaped oxidation catalyst carrier 50, a can 51 for housing the honeycomb structure 100 and the oxidation catalyst carrier 50, and a cushion material 52 for covering the outer peripheral face of the honeycomb structure 100 and the oxidation catalyst carrier 50. The can 51 has an inflow port 55 to allow exhaust gas to flow in and an outflow port 56 to allow exhaust gas to flow out. Incidentally, Fig. 7 is a cross section schematically showing an exhaust gas purification apparatus 1 used in the soot deposition treatment method and the soot compulsory regeneration test measurement method.

The oxidation catalyst carrier 50 is disposed in a position near the inflow port 55 of the can 51, and the honeycomb structure 100 is disposed in a position near the outflow port 56 of the can 51, and these are disposed in series. That is, exhaust gas entering the can 51 from the inflow port 55 thereof passes through the oxidation catalyst carrier 50 and then the honeycomb structure 100 and is discharged from the outflow port 56 of the can 51. Here, the oxidation catalyst carrier 50 has porous partition walls 15 separating and forming a plurality of cells 14 passing through from one end face 12 to the other end face 13 and functioning as fluid passages and a ternary catalyst loaded on the partition walls 15. Then, in the exhaust gas G entering the opening portions on the end face 12 side of the cells 14 of the oxidation catalyst carrier 50, CO, HC, and NOx contained in the exhaust gas G are purified by the ternary catalyst loaded on the partition wall 15, and the gas is discharged from the opening portions on the other side end face 13 side.

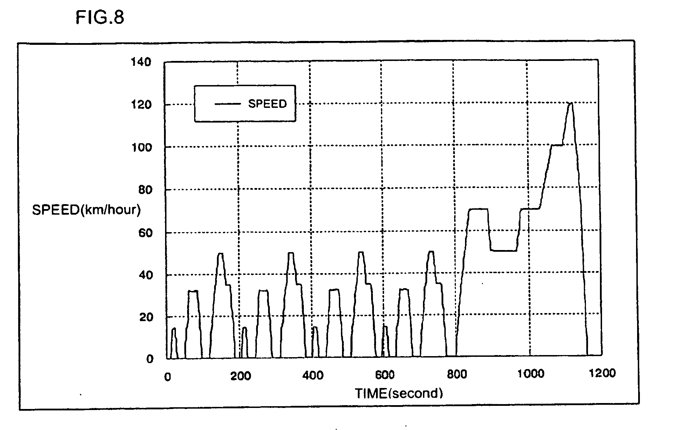

Next, an in-line four-cylinder 2000cc engine is used, and the engine is driven for 1200 seconds by adjusting the engine rotation frequency to have a speed shown in Fig. 8 in each elapsed time with imparting a fixed torque load (60 N·m) . Then, the total amount of soot deposited in the honeycomb structure due to the driving is measured, and the test is repeated until the total amount of deposited soot reaches 10 g/L. Fig. 8 is a graph showing the relation between time and engine speed in the soot deposition treatment method.

### [Soot compulsory regeneration test measurement method]

By the use of the exhaust gas purification apparatus 1 where the soot-deposited honeycomb structure obtained in the aforementioned [soot deposition treatment method] is disposed, post injection is performed with maintaining the engine rotation frequency at 1800 rpm and the engine torque at 90 Nm. Then, post injection is finished when the pressure loss between the one end face side and the other end face side of the honeycomb structure starts falling. After the termination of the post injection, engine is shifted to the idle state to rapidly combust soot in the honeycomb structure, thereby regenerating the honeycomb structure. Then, a series of the soot compulsory regeneration test after the aforementioned soot deposition treatment is performed is repeated 50 times. After the 50 time repeat, presence/absence of a crack or peeling in the application layer and the filling layer portion (filling portion) of the honeycomb structure is visually observed. Acceptance "A" is given when neither the application layer nor the filling portion has no damage, "peeling" is given when the application layer or the filling portion has an incomplete portion, and "crack" is given when the application layer or the filling portion has a crack. In Table 1, since measurement is impossible in Comparative Example 1 because no filling portion is formed, "-" is given.

**[Table 1]**

| | Size of honeycomb structure (mm) | | S1/S0 (%) | Diameter of largest Inscribed circle (mm) | W/D ratio | Soot compulsory regeneration test |
|---|---|---|---|---|---|---|
| | Diameter | Length | | | | |
| Comp. Ex. 1 | 144 | 152 | 0.00 | 0.00 | - | A |
| Example 1 | 144 | 152 | 0.30 | 0.28 | 31 | A |
| Example 2 | 144 | 152 | 0.50 | 0.45 | 28 | A |
| Example 3 | 144 | 152 | 1.60 | 1.05 | 21 | A |
| Example 4 | 144 | 152 | 2.55 | 1.50 | 18 | A |
| Example 5 | 200 | 152 | 0.74 | 0.50 | 32 | A |
| Example 6 | 200 | 152 | 2.50 | 1.30 | 22 | A |
| Example 7 | 254 | 152 | 2.53 | 1.20 | 26 | A |
| Example 8 | 305 | 152 | 2.45 | 1.10 | 29 | A |
| Example 9 | 80 | 152 | 1.91 | 1.50 | 13 | A |
| Example 10 | 144 | 152 | 0.13 | 0.10 | 38 | A |
| Example 11 | 200 | 152 | 0.16 | 0.10 | 45 | A |
| Example 12 | 305 | 152 | 0.33 | 0.19 | 50 | A |
| Example 13 | 80 | 152 | 2.08 | 1.60 | 13 | A |
| Example 14 | 100 | 152 | 2.54 | 1.70 | 14 | A |
| Example 15 | 120 | 152 | 2.54 | 1.59 | 17 | A |
| Example 16 | 80 | 152 | 2.45 | 1.80 | 12 | A |
| Comp. Ex. 2 | 60 | 152 | 2.45 | 2.00 | 10 | Peeling |
| Comp. Ex. 3 | 80 | 152 | 2.54 | 1.85 | 12 | Peeling |
| Comp. Ex. 4 | 144 | 152 | 2.95 | 1.73 | 17 | Peeling |
| Comp. Ex. 5 | 144 | 152 | 3.95 | 2.14 | 15 | Peeling |
| Comp Ex. 6 | 144 | 152 | 2.57 | 1.50 | 18 | Peeling |
| Comp. Ex. 7 | 305 | 152 | 2.77 | 1.20 | 28 | Peeling |
| Comp. Ex. 8 | 305 | 152 | 0.20 | 0.10 | 55 | Crack |
| Comp. Ex. 9 | 350 | 152 | 0.37 | 0.20 | 53 | Crack |

### (Examples 2 to 16 and Comparative Examples 1 to 9)

The honeycomb structures of each of Examples 2 to 16 and Comparative Examples 1 to 9 were manufactured in the same manner as in Example 1 except that the diameter, length S1/S0(%), diameter of the largest inscribed circle (mm) , and W/D ratio shown in Table 1 were employed. Then, in the same manner as in Example 1, the structures were evaluated for the "soot compulsory regeneration test" results by the aforementioned method. The results are shown in Table 1.

As clear from Table 1, it could be confirmed that the honeycomb structures of Examples 1 to 16 hardly have crack generation even under a condition having rapid temperature change with reducing the amount of raw materials to be used as much as possible.

A honeycomb structure of the present invention can be used as a filter for trapping particulate matter in exhaust gas discharged from an internal combustion engine or the like.

## Claims

1. A honeycomb structure comprising:
a honeycomb structural portion having a plurality of honeycomb segments having porous partition walls separating and forming a plurality of cells passing through from one end face to the other end face and functioning as fluid passages and plugging portions plugging opening portions of predetermined cells in the one end face and opening portions of the remaining cells in the other end face,
an outer peripheral wall formed so as to cover the outer peripheral face of the honeycomb structural portion, and
a filling portion filling a gap formed between the honeycomb structural portion and the outer peripheral wall;
wherein the honeycomb segments include a polygonal columnar honeycomb segment which does not constitute the outer peripheral face of the honeycomb structural portion in a cross section perpendicular to a cell extension direction,
the ratio of a total area of the filling portions to an area of the columnar honeycomb segment in the cross section perpendicular to the cell extension direction is 2.55% or less,
when circles are inscribed in an outer peripheral edge of a region which the filling portion takes over in the cross section perpendicular to the cell extension direction, the circle having the largest diameter among the circles has a diameter D of 1.8 mm or less, and
the value obtained by dividing a distance W between two points which are located on the outer peripheral edge of the region and whose linear distance is maximum by the diameter D is 50 or less.

2. The honeycomb structure according to Claim 1, wherein the ratio of total area of the filling portions to the area of the columnar honeycomb segment in the cross section perpendicular to the cell extension direction is 0.5 to 2.55%.

3. The honeycomb structure according to Claim 1 or 2, wherein the value obtained by dividing the distance W by the diameter D is 5 to 50.

## Patentansprüche

1. Wabenstruktur, umfassend:
einen Wabenstrukturabschnitt mit einer Vielzahl von Wabensegmenten mit porösen Trennwänden, die eine Vielzahl von Zellen trennen und ausbilden, die von einer Endfläche zur anderen Endfläche hindurchführen und als Fluiddurchlässe und Verschlussabschnitte fungieren, die Öffnungsabschnitte von vorbestimmten Zellen an der einen Endfläche und Öffnungsabschnitte der verbleibenden Zellen an der anderen Endfläche verschließen,
eine äußere Umfangswand, die so ausgebildet ist, dass sie die äußere Umfangsfläche des Wabenstrukturabschnitts bedeckt, und
einen Füllabschnitt, der einen zwischen dem Wabenstrukturabschnitt und der äußeren Umfangswand ausgebildeten Zwischenraum füllt;
wobei die Wabensegmente ein polygonales stabartiges Wabensegment umfassen, das nicht die äußere Umfangsfläche des Wabenstrukturabschnitts in einem Querschnitt im rechten Winkel auf die Richtung der Zellausdehnung bildet,
das Verhältnis der Gesamtfläche der Füllabschnitte zu einer Fläche des stabförmigen Wabensegments im Querschnitt im rechten Winkel auf diese Richtung der Zellausdehnung 2,55 % oder weniger beträgt,
wenn Kreise in einem äußeren Umfangsrand eines Bereichs eingeschrieben werden, den der Füllabschnitt im Querschnitt im rechten Winkel auf die Richtung der Zellausdehnung ausfüllt, der Kreis mit dem größten Durchmesser unter den Kreisen einen Durchmesser D von 1,8 mm oder weniger aufweist, und
der Wert, den man erhält, wenn man eine Entfernung W zwischen zwei Punkten, die an dem äußeren Umfangsrand des Bereichs liegen und deren lineare Entfernung maximal ist, durch den Durchmesser D dividiert, 50 oder weniger beträgt.

2. Wabenstruktur gemäß Anspruch 1, worin das Verhältnis der Gesamtfläche der Füllabschnitte zur Fläche des stabförmigen Wabensegments im Querschnitt im rechten Winkel zur Richtung der Zellausdehnung 0,5 bis 2,55 % beträgt.

3. Wabenstruktur gemäß Anspruch 1 oder 2, worin der Wert, den man erhält, wenn man die Entfernung W durch den Durchmesser D dividiert, 5 bis 50 beträgt.

## Revendications

1. Structure en nid d'abeilles comprenant :
une partie structurelle en nid d'abeilles ayant une pluralité de segments en nid d'abeilles ayant des parois de séparation poreuses séparant et formant une pluralité d'alvéoles passant d'une face d'extrémité à l'autre face d'extrémité et fonctionnant en tant que passages de fluide et parties d'obstruction bouchant les parties d'ouverture des alvéoles prédéterminées dans la première face d'extrémité et les parties d'ouverture des alvéoles restantes dans l'autre face d'extrémité,
une paroi périphérique externe formée afin de recouvrir la face périphérique externe de la partie structurelle en nid d'abeilles, et
une partie de remplissage remplissant un espace formé entre la partie structurelle en nid d'abeilles et la paroi périphérique externe ;
dans laquelle les segments en nid d'abeilles comprennent un segment en nid d'abeilles colonnaire polygonal qui ne constitue pas la face périphérique externe de la partie structurelle en nid d'abeilles en coupe perpendiculaire à une direction d'extension d'alvéole,
le rapport d'une surface totale des parties de remplissage sur une surface du segment en nid d'abeilles colonnaire en coupe perpendiculaire à la direction d'extension d'alvéole est de 2,55% ou moins,
lorsque des cercles sont inscrits dans un bord périphérique externe d'une région que la partie de remplissage absorbe dans la coupe perpendiculaire à la direction d'extension d'alvéole, le cercle ayant le plus grand diamètre parmi les cercles a un diamètre D de 1,8 mm ou moins, et
la valeur obtenue en divisant une distance W entre deux points qui sont positionnés sur le bord périphérique externe de la région et dont la distance linéaire est maximum par le diamètre D, est de 50 ou moins.

2. Structure en nid d'abeilles selon la revendication 1, dans lequel le rapport de la surface totale des parties de remplissage sur la surface du segment en nid d'abeilles colonnaire dans la section transversale perpendiculaire à la direction d'extension d'alvéole est de 0,5 à 2,55 %.

3. Structure en nid d'abeilles selon la revendication 1 ou 2, dans laquelle la valeur obtenue en divisant la distance W par le diamètre D, est de 5 à 50.
